# EUROPÄISCHE PATENTSCHRIFT

(11) **EP 1 743 688 B1**
(45) Veröffentlichungstag und Bekanntmachung des Hinweises auf die Patenterteilung: **12.12.2007**
(21) Anmeldenummer: 05021043.4
(22) Anmeldetag: 27.09.2005
(51) Int. Cl.: B01D 53/00, F25J 3/08, F17C 9/04

(54) **Verfahren und Vorrichtung zur Kryokondensation**
Process and system for cryocondensation
Procédé et dispositif pour la cryocondensation

(30) Priorität: 15.07.2005 DE 102005033252
(43) Veröffentlichungstag der Anmeldung: 17.01.2007
(73) Patentinhaber: Linde Aktiengesellschaft, 80807 München (DE)
(72) Erfinder: Obermeyer, Heinz-Dieter, Dr., 85356 Freising (DE); Reinhardt, Hans-Jürgen, Dr., 87600 Kaufbeuren (DE); Wolf, Stefan, Dr., 85540 Haar (DE)
(74) Vertreter: Gellner, Bernd

(56) Entgegenhaltungen:
- EP-A- 0 749 549
- EP-A- 1 473 071
- DE-C1- 10 223 845
- DE-C1- 19 517 273
- DE-C1- 19 645 487

## Beschreibung

Die Erfindung betrifft ein Verfahren zum Kühlen und/oder Reinigen eines Prozessgases, wobei das Prozessgas in einem Vorkühler in indirektem Wärmeaustausch mit einem zweiten Kühlmittelstrom vorgekühlt und in einem Tiefkühler in indirektem Wärmeaustausch mit einem ersten Kühlmittelstrom gekühlt wird, wobei zumindest ein Teil des aus dem Tiefkühler austretenden ersten Kühlmittelstroms dem Vorkühler als zweiter Kühlmittelstrom zugeführt wird, und wobei der erste Kühlmittelstrom durch Verdampfung eines kondensierten Gases gewonnen wird.

Ferner bezieht sich die Erfindung auf eine Vorrichtung zum Kühlen und/oder Reinigen eines Prozessgases, mit einem als indirektem Wärmetauscher ausgeführten Vorkühler mit einer Zuleitung für Prozessgas und einer Ableitung für vorgekühltes Prozessgas und mit einer Kühlmittelzuleitung und einem Kühlmittelabzug, mit einem als indirektem Wärmetauscher ausgeführten Tiefkühler mit einer Zuleitung für Prozessgas und einer Ableitung für tiefgekühltes Prozessgas und mit einer Kühlmittelzuleitung und einem Kühlmittelabzug, mit einem als indirektem Wärmetauscher ausgeführten Verdampfer mit einer Kühlmittelzuleitung und einem Kühlmittelabzug und mit mindestens einer Heizmediumzuleitung und einem Heizmediumabzug, wobei die Ableitung des Vorkühlers für vorgekühltes Prozessgas mit der Zuleitung des Tiefkühlers für Prozessgas verbunden ist, wobei der Kühlmittelabzug des Verdampfers mit der Kühlmittelzuleitung des Tiefkühlers verbunden ist, wobei der Kühlmittelabzug des Tiefkühlers mit der Kühlmittelzuleitung des Vorkühlers verbunden ist.

Bei der Reinigung eines Prozessgases mittels Kryokondensation wird das zu reinigende Prozessgas in einem Wärmetauscher in indirekten Wärmeaustausch mit einem tiefkalten Kühlmittel gebracht, um Verunreinigungen aus dem Prozessgas auszufrieren bzw. auszukondensieren. Bei diesem Verfahren ist es wichtig, den Wärmeübergang zwischen dem Kühlmittel und dem Prozessgas nicht zu intensiv zu gestalten. So ist die Verwendung von flüssigem Stickstoff unmittelbar als Kühlmittel häufig nicht wünschenswert.

Flüssiger Stickstoff ist aber grundsätzlich ein günstiges Kältemittel. Es werde n deshalb Prozesse angewandt, die verhindern, dass im Wärmetauscher die Passagen für den flüssigen Stickstoff direkt an die Passagen für das Prozessgas angrenzen. Hierzu ist beispielsweise aus der DE 40 01 330 A1 bekannt, den flüssigen Stickstoff im Zentralrohr eines Doppelrohres zu verdampfen und den entstehenden gasförmigen Stickstoff in dem umgebenden konzentrischen Ringspalt zu führen. Das zu kühlende bzw. zu reinigende Prozessgas strömt außen am Doppelrohr vorbei und wird durch den gasförmigen Stcikstoff gekühlt.

In der deutschen Patentschrift DE 102 23 845 C1 wird ein Kältekreislauf vorgeschlagen, der die Kälte vom flüssigen Stickstoff auf das Prozessgas überträgt.

Die EP 0 749 549 B1 beschreibt ein Verfahren zum Kühlen eines Prozessgases, bei dem flüssiger Stickstoff in einem Vorverdampfer zunächst verdampft und der resultierende gasförmige Stickstoff dann zur Kühlung des Prozessgases herangezogen wird.

Zur besseren Ausnutzung des Kälteinhalts des Kühlmittels ist weiter bekannt, das aus einem ersten Wärmetauscher, einem Tiefkühler, austretende Kühlmittel einem als Vorkühler dienenden zweiten Wärmetauscher als Kälteträger zuzuführen. Das zu kühlende Prozessgas wird dann im Gegenstrom zunächst durch den Vorkühler und anschließend durch den Tiefkühler geführt.

In der Praxis kommt es häufig zu relativ großen Schwankungen des Prozessgasstromes. Dies hat starke Auswirkungen auf den Wärmeübergang zwischen Kältemittel und Prozessgas. Insbesondere wenn das Prozessgas zunächst in einem Vorkühler und anschließend in einem Tiefkühler gereinigt werden soll, kann dies dazu führen, dass der Vorkühler keinen merklichen Beitrag zur Kondensation mehr leistet und die gesamte Reinigung, das heißt Kondensation oder Ausfrierung, im Tiefkühler erfolgt. Dabei besteht die Gefahr, dass im Prozessgas befindliche Verunreinigungen auf den Wärmetauscheroberflächen des Tiefkühlers ausfrieren und diesen blockieren.

Aufgabe vorliegender Erfindung ist es daher, ein Verfahren und eine Vorrichtung der eingangs genannten Art so weiter zu entwickeln, dass auch bei wechselndem Volumenstrom an zu reinigendem oder zu kühiendem Prozessgas bessere Kühl- und Reingungsleistungen erzielt werden.

Diese Aufgabe wird durch ein Verfahren zum Kühlen und/oder Reinigen eines Prozessgases gelöst,
- wobei das Prozessgas in einem Vorkühler in indirektem Wärmeaustausch mit einem zweiten Kühlmittelstrom vorgekühlt
- und in einem Tiefkühler in indirektem Wärmeaustausch mit einem ersten Kühlmittelstrom gekühlt wird,
- wobei zumindest ein Teil des aus dem Tiefkühler austretenden ersten Kühlmittelstroms dem Vorkühler als zweiter Kühlmittelstrom zugeführt wird,
- wobei der erste Kühlmitteistrom durch Verdampfung eines kondensierten Gases gewonnen wird, und
- wobei das kondensierte Gas in indirektem Wärmeaustausch mit zumindest einem Teil des aus dem Tiefkühler austretenden ersten Kühlmittelstroms und mit zumindest einem Teil des aus dem Vorkühler austretenden zweiten Kühlmittelstroms verdampft wird.

Die erfindungsgemäße Vorrichtung zum Kühlen und/oder Reinigen eines Prozessgases besitzt
- einen als indirekten Wärmetauscher ausgeführten Vorkühler mit einer Prozessgaszuleitung und einer Prozessgasableitung und mit einer Kühlmittelzuleitung und einem Kühlmittelabzug,
- einen als indirekten Wärmetauscher ausgeführten Tiefkühler mit einer Prozessgaszuleitung und einer Prozessgasableitung und mit einer Kühlmittelzuleitung und einem Kühlmittelabzug,
- einen als indirekten Wärmetauscher ausgeführten Verdampfer mit einer Kühlmittelzuleitung und einem Kühlmittelabzug und mit mindestens einer Heizmediumzuleitung und einem Heizmediumabzug,
- wobei die Prozessgasableitung des Vorkühlers mit der Prozessgaszuleitung des Tiefkühlers verbunden ist,
- wobei der Kühlmittelabzug des Verdampfers mit der Kühlmittelzuleitung des Tiefkühlers verbunden ist,
- wobei der Kühlmittelabzug des Tiefkühlers mit der Kühlmittelzuleitung des Vorkühlers verbunden ist, und
- wobei der Kühlmittelabzug des Tiefkühlers und der Kühlmittelabzug des Vorkühlers mit einer der Heizmediumzuleitungen des Verdampfers verbunden sind.

Erfindungsgemäß wird ein kondensiertes Gas in einem Verdampfer verdampft. Das resultierende kalte Gas wird dann als erster Kühlmittelstrom im Tiefkühler eingesetzt. Der aus dem Tiefkühler abgezogene erste Kühlmittelstrom wird zumindest teilweise einem Vorkühler als zweiter Kühlmittelstrom zugeführt.

Das zu kühlende Prozessgas wird zunächst durch den Vorkühler geleitet und dabei vorgekühlt. Ein Teil der in dem Prozessgas vorhandenen Verunreinigungen wird bereits im Vorkühler auskondensiert oder ausgefroren. Stromabwärts des Vorkühlers wird das vorgekühlte Prozessgas in den Tiefkühler geleitet und auf die gewünschte Endtemperatur abgekühlt beziehungsweise die verbliebenen Verunreinigungen werden auskondensiert oder ausgefroren.

Erfindungsgemäß wird das Prozessgas einer stufenweisen Kühlung unterzogen, nämlich zunächst in dem Vorkühler und anschließend im Tiefkühler. Als Kühlmittel kommt dabei verdampftes Gas zum Einsatz, so dass die eingangs genannten Probleme vermieden werden, die bei der Verwendung tiefkalter flüssiger Kühlmittel auftreten können.

Die Verdampfungsenthalpie zur Verdampfung des kondensierten Gases wird durch zwei Ströme zur Verfügung gestellt. Zum einen wird zumindest ein Teil des aus dem Tiefkühler abgezogenen und bereits angewärmten ersten Kühlmittelstroms dem Verdampfer als Heizmedium zugeführt, zum anderen wird der aus dem Vorkühler austretende zweite Kühlmittelstrom zumindest teilweise als Heizmedium verwendet.

Erfindungsgemäß wird also die zur Verdampfung des kondensierten Gases notwendige Verdampfungsenthalpie nicht nur aus einem, sondern aus zwei Strömen gewonnen. Die beiden Ströme können vor dem Verdampfer zusammengeführt und als ein gemeinsamer Strom in den Verdampfer geführt werden oder, bevorzugt, als getrennte Ströme in und durch den Verdampfer geleitet werden.

Vorzugsweise werden weder der komplette erste Kühlmittelstrom aus dem Tiefkühler noch der komplette zweite Kühlmittelstrom aus dem Vorkühler dem Verdampfer zugeführt, sondern jeweils nur ein Teil dieser beiden Kühlmittelströme. Es ist aber auch möglich, den kompletten den Tiefkühler verlassenden ersten Kühlmittelstrom zum Verdampfer zu leiten und zusätzlich noch den zweiten Kühlmittelstrom zur Verdampfung des kondensierten Gases einzusetzen. Umgekehrt kann natürlich au ch der komplette zweite Kühlmittelstrom und nur ein Teil des ersten Kühlmittelstroms verwendet werden.

Wesentlich an dem erfindungsgemäßen Verfahren ist, dass zwei unterschiedliche Ströme als Heizmedium zur Verdampfung des kondensierten Gases herangezogen werden. Auf diese Weise können die Wärmeübertragungsverhältnisse im Verdampfer, Vorkühler und Tiefkühler an Schwankungen des Prozessgasstroms gezielt angepasst werden. Insbesondere kann dem Verdampfer genau die Wärmemenge zugeführt werden, die notwendig ist, um das in den Verdampfer geleitete kondensierte Gas zu verdampfen.

Außerdem können die Temperaturverhältnisse im Vorkühler eingestellt beziehungsweise geregelt werden. Der Teil des den Tiefkühler verlassenden ersten Kühlmittelstroms, der dem Verdampfer als Heizmedium zugeführt wird, wird nämlich durch den indirekten Wärmetausch mit dem kondensierten Gas im Verdampfer zwischengekühlt. Je nachdem welcher Volumenstrom des ersten Kühlmittelstroms zwischengekühlt und anschließend dem Vorkühler zugeführt wird, wird sich die Temperatur im Vorkühler einstellen.

Die Mengen an erstem und / oder zweitem Kühlmittelstrom, die zur Verdampfung des kondensierten Gases eingesetzt werden, werden bevorzugt in Abhängigkeit von der Temperatur des verdampften kondensierten Gases bestimmt. Hierzu wird vorzugsweise am Kühlmittelabzug des Verdampfers, an dem das verdampfte Gas austritt, dessen Temperatur gemessen und die Mengen der dem Verdampfer als Heizmedium zugeführten beiden Kühlmittelströme werden in Abhängigkeit von dieser Temperatur geregelt.

Besonders bevorzugt wird zudem ein Sollwert für die Eintrittstemperatur des zweiten Kühlmittelstroms in den Vorkühler vorgegeben. Die Regelung des ersten und des zweiten Kühlmittelstroms, insbesondere der dem Verdampfer zugeleiteten Anteile dieser Kühlmittelströme, erfolgt dann in Abhängigkeit von diesem Sollwert und in Abhängigkeit von der Austrittstemperatur am Kühlmittelabzug des Verdampfers.

Schwankungen des Prozessgasstromes wirken sich unmittelbar auf die Wärmeübertragungsverhältnisse im Tiefkühler und im Vorkühler aus. Die Temperatur des den Tiefkühler verlassenden ersten Kühlmittelstroms und die des den Vorkühler verlassenden zweiten Kühlmittelstroms hängen damit von der Menge und Zusammensetzung des Prozessgases und von den Betriebsbedingungen ab. Durch die erfindungsgemäße Regelung der Kühlmittelströme wird die Verdampfung im Verdampfer an Schwankungen des Prozessgasstromes angepasst und es werden stets optimale Wärmeübertragungsbedingungen im Vorkühler und im Tiefkühle r sichergestellt.

Als bevorzugtes Kühlmittel hat sich Stickstoff bewährt. Hierzu wird dem Verdampfer flüssiger Stickstoff zugeführt und verdampft. Der resultierende gasförmige Stickstoff wird zunächst in den Tiefkühler und dann weiter in den Vorkühler geleitet. Ein Teil des den Tiefkühler verlassenden Stickstoffgases wird im Verdampfer zur Verdampfung des flüssigen Stickstoffs genutzt und anschließend in den Vorkühler geleitet. Die Verdampfungsenthalpie zur Verdampfung des flüssigen Stickstoffs wird außerdem durch einen Teilstrom gasförmigen Stickstoffs aufgebracht, der am Ausgang des Vorkühlers abgezweigt wird.

Das erfindungsgemäße Verfahren eignet sich zum Abkühlen eines Prozessgasstromes und insbesondere auch zum Reinigen eines Prozessgasstromes. Zur Reinigung des Prozessgasstromes werden die Wärmeübertragungs- und Temperaturverhältnisse im Vorkühler und / oder im Tiefkühler so gewählt, dass in dem Prozessgasstrom vorhandene, dampfförmige Stoffe und Verunreinigungen auskondensiert oder ausgefroren werden. Diese Verfahrensweise ist sowohl von Vorteil, wenn das Ziel darin liegt, einen gereinigten Prozessgasstrom zu erhalten, als auch wenn in dem Prozessgasstrom vorhandene Stoffe zurückgewonnen werden sollen.

Vorzugsweise werden auskondensierte Verunreinigungen oder Stoffe aus dem Vorkühler bzw. aus dem Tiefkühler abgezogen. Die Passagen des Vorkühlers und / oder die Passagen des Tiefkühlers, durch die das zu reinigende und zu kühlende Prozessgas strömt, sind hierzu von Vorteil mit einem entsprechenden Kondensatauslass versehen. Von Vorteil ist weiterhin ein Sammelbehälter vorgesehen, in den die Kondensatauslässe münden und der zum Sammeln, Rückgewinnen und gegebenenfalls Wiederverwenden des Kondensats dient.

Zumindest ein Teil des dem Tiefkühler entnommenen ersten Kühlmittelstroms wird erfindungsgemäß dem Verdampfer als Heizmedium zugeführt. Vorzugsweise wird dieser Strom oder zumindest ein Teil dieses Stromes nach dem Austritt aus dem Verdampfer als zweiter Kühlmittelstrom in den Vorkühler geleitet. Im Verdampfer wird der erste Kühlmittelstrom durch indirekten Wärmetausch mit dem kondensierten Gas zwischengekühlt, bevor er als zweiter Kühlmittelstrom in den Vorkühler eintritt. Über die Zwischenkühlung kann die Temperatur des zweiten Kühlmittelstroms so geregelt werden, dass bereits im Vorkühler ein bestimmter Teil der Verunreinigungen im Prozessgasstrom auskondensiert oder ausfriert.

Entsprechend ist die erfindungsgemäße Vorrichtung von Vorteil so ausgeführt, dass der Heizmediumabzug, der über die Heizmediumzuleitung mit dem Kühlmittelabzug des Tiefkühlers verbunden ist, mit der Kühlmittelzuleitung des Vorkühlers verbunden ist.

Aus energetischen Gründen ist es besonders zweckmäßig, den den Tiefkühler verlassenden, gereinigten, kalten Prozessgasstrom zur Kühlung des dem Vorkühler zugeführten noch ungereinigten Prozessgasstromes zu verwenden. Hierzu wird dem Vorkühler noch ein weiterer Kühler vorgeschaltet, in dem der ungereinigte Prozessgasstrom in indirektem Wärmetausch mit dem kalten gereinigten Prozessgasstrom vorgekühlt wird.

Die Erfindung hat deutliche Vorteile gegenüber den bekannten Verfahren. Durch die Zwischenkühlung des den Tiefkühler verlassenden ersten Kühlmittelstroms, beispielsweise des gasförmigen Stickstoffs, wird im Vorkühler auch bei wechselnden Prozessgasströmen stets ein Beitrag zur Kondensation geleistet. Der Vorkühler wird für alle Durchsatzmengen an Prozessgas bereits zur Abgasreinigung benutzt. Dadurch werden die Wärmetauscheroberflächen im Vorkühler und im Tiefkühler gleichmäßiger beansprucht. Bei Anfrierungen von Verunreinigungen im Prozessgasstrom verteilen sich die Eismengen besser über die Wärmetauscheroberflächen von Vorkühler und Tiefkühler. Die Abkühlung des Prozessgasstromes erfolgt langsamer und gleichmäßiger, wodurch beispielsweise die Gefahr der Nebelbildung verringert wird. Das Verfahren ist flexibel an unterschiedliche Prozessgas-Volumenströme und Prozessgas-Zusammensetzungen anpassbar, wodurch die Reinigungsleistung der Vorrichtung optimiert werden kann. Die Erfindung hat sich insbesondere zur Reinigung von mit leichtsiedenden dampfförmigen Bestandteilen, wie Lösemitteln, beladene Prozessgase bewährt. Mit dem erfindungsgemäßen Verfahren können die dampfförmigen Bestandteile zurückgewonnen werden und man erhält einen reinen Prozessgasstrom.

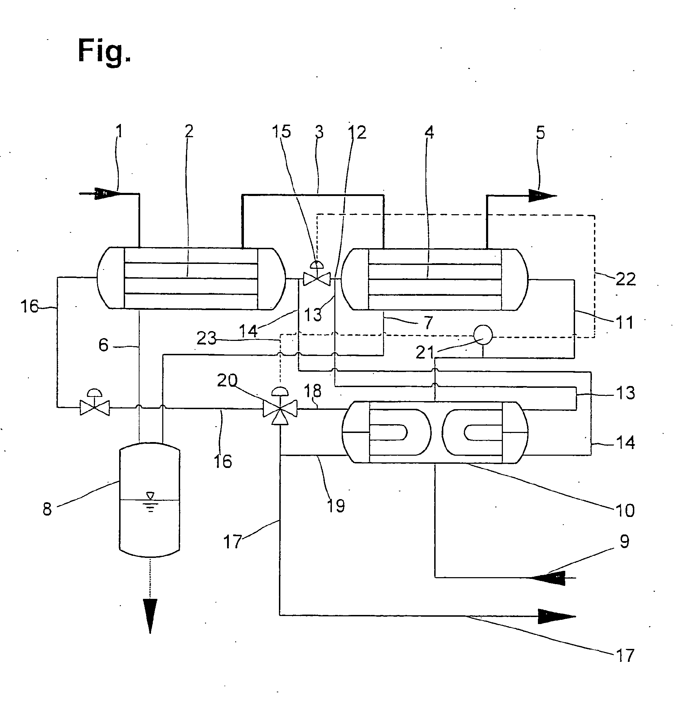

Die Erfindung sowie weitere Einzelheiten und vorteilhafte Ausgestaltungen der Erfindung werden im Folgenden anhand von dem in der Zeichnung schematisch dargestellten Ausführungsbeispiel näher erläutert. Hierbei zeigt die
- Figur: eine schematische Darstellung der erfindungsgemäßen Prozessgasreinigung.

In der Figur ist schematisch eine Anlage zur Kryokondensation von flüchtigen Stoffen in einem Prozessgasstrom 1 dargestellt. Der Prozessstrom 1 enthält dampfförmige Verunreinigungen, wie beispielsweise leichtflüchtige Lösemittel, die aus dem Prozessgasstrom 1 entfernt und wiedergewonnen werden sollen.

Der mit den Verunreinigungen beladene Prozessgasstrom 1 wird hierzu einem Vorkühler 2 zugeführt, in dem der Prozessgasstrom 1 in indirektem Wärmetausch mit gasförmigem Stickstoff gekühlt und ein Teil der Verunreinigungen auskondensiert oder ausgefroren wird. Der teilgereinigte Prozessgasstrom 3 wird anschließend in einem Tiefkühler 4 ebenfalls in indirektem Wärmetausch mit gasförmigem Stickstoff abgekühlt. Der gereinigte Prozessgasstrom 5 wird aus dem Tiefkühler 4 abgezogen.

Das bei der Kryokondensation in dem Vorkühler 2 und dem Tiefkühler 4 anfallende Kondensat wird über Leitungen 6, 7 aus dem Vorkühler 2 bzw. dem Tiefkühler 4 abgezogen und einem Speicherbehälter 8 zugeführt.

Flüssiger Stickstoff 9 wird einem in der Figur nicht dargestellten Tank entnommen und einem Verdampfer 10 zugeführt. In dem Verdampfer 10 wird der flüssige Stickstoff verdampft und der resultierende gasförmige Stickstoff 11 wird als Kühlmittel in den Tiefkühler 4 geleitet. Der den Tiefkühler 4 verlassende gasförmige Stickstoff 12 wird zum Teil in den Vorkühler 2 weitergeleitet, um dort ebenfalls als Kühlmittel zur Kondensation der in dem Prozessgasstrom 1 enthaltenen Verunreinigungen zu dienen.

Der verbleibende Teil 13 des den Tiefkühler 4 verlassenden gasförmigen Stickstoffs 12 wird dem Verdampfer 10 zugeführt und dient als Heizmedium, um einen Teil der Verdampfungswärme zur Verdampfung des flüssigen Stickstoffs 9 aufzubringen. Hierbei wird der gasförmige Stickstoff 13 gekühlt. Der so zwischengekühlte Stickstoff 14 wird anschließend mit dem vom Tiefkühler 4 abgezogenen und direkt dem Vorkühler 2 zugeführten Stickstoffstrom zusammengeführt und in den Vorkühler 2 geleitet.

Das Mengenverhältnis zwischen dem zum Verdampfer 10 geleiteten Stickstoffstrom 13 und dem direkt zum Vorkühler 2 geleiteten Stickstoffstrom kann über ein Ventil 15 in der den Tiefkühler 4 und den Vorkühler 2 verbindenden Leitung eingestellt werden.

Der in dem Vorkühler 2 angewärmte gasförmige Stickstoff 16 wird zum Teil über Leitung 17 dem Prozess entnommen und einer anderweitigen Verwendung, beispielsweise als Inertgas, zugeführt. Zum Teil 18 wird der Stickstoffstrom 16 aber auch in den Verdampfer 10 als Heizmedium zur Verdampfung des flüssigen Stickstoffs 9 geleitet. Der hierbei abgekühlte Stickstoff 19 wird dann mit dem Stickstoffstrom 17 zusammengeführt und abgezogen.

Die dem Verdampfer 10 zugeführte Menge 18 des Stickstoffstroms 16 kann über ein Drei-Wege-Ventil 20 eingestellt und geregelt werden.

Die Regelung der dem Verdampfer 10 als Heizmedien zugeführten Ströme 13, 18 erfolgt in Abhängigkeit von der Temperatur des aus dem Verdampfer 10 austretenden, verdampften Stickstoffs 11. Hierzu ist ein Temperaturfühler 21 vorgesehen, der über eine Signalleitung 22 mit dem Ventil 15 und über eine Signalleitung 23 mit dem 3-Wege-Ventil 20 verbunden ist.

## Patentansprüche

1. Verfahren zum Kühlen und/oder Reinigen eines Prozessgases (1),
• wobei das Prozessgas (1) in einem Vorkühler (2) in indirektem Wärmeaustausch mit einem zweiten Kühlmittelstrom (12) vorgekühlt
• und in einem Tiefkühler (4) in indirektem Wärmeaustausch mit einem ersten Kühlmittelstrom (11) gekühlt wird,
• wobei zumindest ein Teil (12) des aus dem Tiefkühler (4) austretenden ersten Kühlmittelstroms (11) dem Vorkühler (2) als zweiter Kühlmittelstrom zugeführt wird,
• wobei der erste Kühlmittelstrom (11) durch Verdampfung eines kondensierten Gases (9) gewonnen wird,
**dadurch gekennzeichnet, dass**
• das kondensierte Gas (9) in indirektem Wärmeaustausch mit zumindest einem Teil (13) des aus dem Tiefkühler (4) austretenden ersten Kühlmittelstroms (11) und mit zumindest einem Teil (18) des aus dem Vorkühler (2) austretenden zweiten Kühlmittelstroms (12) verdampft wird.

2. Verfahren nach Anspruch 1, **dadurch gekennzeichnet, dass** die Mengen an erstem und / oder zweitem Kühlmittelstrom (13, 18), die zur Verdampfung des kondensierten Gases (9) eingesetzt werden, in Abhängigkeit von der Temperatur des verdampften kondensierten Gases (11) bestimmt werden.

3. Verfahren nach einem der Ansprüche 1 oder 2, **dadurch gekennzeichnet, dass** der erste Kühlmittelstrom (11) durch Verdampfung von flüssigem Stickstoff (9) gewonnen wird.

4. Verfahren nach einem der Ansprüche 1 bis 3, **dadurch gekennzeichnet, dass** in dem Vorkühler (2) und / oder in dem Tiefkühler (4) Verunreinigungen aus dem Prozessgas (1) auskondensiert oder ausgefroren werden.

5. Verfahren nach Anspruch 4, **dadurch gekennzeichnet, dass** in dem Vorkühler (2) und / oder in dem Tiefkühler (4) auskondensierte Verunreinigungen aus dem Vorkühler (2) bzw. aus dem Tiefkühler (4) abgezogen werden.

6. Verfahren nach einem der Ansprüche 1 bis 5, **dadurch gekennzeichnet, dass** der zur Verdampfung des kondensierten Gases (9) eingesetzte Teil (13) des ersten Kühlmittelstroms dem Vorkühler (2) als zweiter Kühlmittelstrom (14) zugeführt wird.

7. Vorrichtung zum Kühlen und/oder Reinigen eines Prozessgases (1),
• einen als indirekten Wärmetauscher ausgeführten Vorkühler (2) mit einer Prozessgaszuleitung (1) und einer Prozessgasableitung (3) und mit einer Kühlmittelzuleitung (12, 14) und einem Kühlmittelabzug (16),
• einen als indirekten Wärmetauscher ausgeführten Tiefkühler (4) mit einer Prozessgaszuleitung (3) und einer Prozessgasableitung (5) und mit einer Kühlmittelzuleitung (11) und einem Kühlmittelabzug (12),
• einen als indirekten Wärmetauscher ausgeführten Verdampfer (10) mit einer Kühlmittelzuleitung (9) und einem Kühlmittelabzug (11) und mit mindestens einer Heizmediumzuleitung (13, 18) und einem Heizmediumabzug (14, 19),
• wobei die Prozessgasableitung (3) des Vorkühlers (2) mit der Prozessgaszuleitung (3) des Tiefkühlers (4) verbunden ist,
• wobei der Kühlmittelabzug (11) des Verdampfers (10) mit der Kühlmittelzuleitung (11) des Tiefkühlers (4) verbunden ist,
• wobei der Kühlmittelabzug (12) des Tiefkühlers (4) mit der Kühlmittelzuleitung (12) des Vorkühlers (2) verbunden ist,
**dadurch gekennzeichnet, dass**
der Kühlmittelabzug (12) des Tiefkühlers (4) und der Kühlmittelabzug (16) des Vorkühlers (2) mit einer der Heizmediumzuleitungen (13, 18) des Verdampfers (10) verbunden sind.

8. Vorrichtung nach Anspruch 7, **dadurch gekennzeichnet, dass** der Heizmediumabzug (14), der über die Heizmediumzuleitung (13) mit dem Kühlmittelabzug (12) des Tiefkühlers (4) verbunden ist, mit der Kühlmittelzuleitung (14) des Vorkühlers (2) verbunden ist.

9. Vorrichtung nach einem der Ansprüche 7 oder 8, **dadurch gekennzeichnet, dass** ein Vorratsbehälter für ein kondensiertes Gas mit der Kühlmittelzuleitung (9) des Verdampfers (10) verbunden ist.

10. Vorrichtung nach einem der Ansprüche 7 bis 9, **dadurch gekennzeichnet, dass** der Vorkühler (2) und / oder der Tiefkühler (4) mit einer Kondensatableitung (6, 7) versehen sind.

## Claims

1. Process for cooling and/or purifying a process gas (1),
• wherein the process gas (1) is precooled in a precooler (2) in indirect heat exchange with a second coolant stream (12)
• and cooled in a freezer (4) in indirect heat exchange with a first coolant stream (11),
• wherein at least a part (12) of the first coolant stream (11) exiting from the freezer (4) is fed to the precooler (2) as a second coolant stream,
• wherein the first coolant stream (11) is obtained by vaporizing a condensed gas (9),
**characterized in that**
• the condensed gas (9) is vaporized in indirect heat exchange with at least a part (13) of the first coolant stream (11) exiting from the freezer (4) and with at least a part (18) of the second coolant stream (12) exiting from the precooler (2).

2. Process according to Claim 1, **characterized in that** the amounts of first and/or second coolant stream (13, 18) which are used for vaporizing the condensed gas (9) are determined as a function of the temperature of the vaporized condensed gas (11).

3. Process according to one of Claims 1 or 2, **characterized in that** the first coolant stream (11) is obtained by vaporizing liquid nitrogen (9).

4. Process according to one of Claims 1. to 3, **characterized in that**, in the precooler (2) and/or in the freezer (4), impurities are condensed out or frozen out of the process gas (1).

5. Process according to Claim 4, **characterized in that** impurities which have condensed out in the precooler (2) and/or in the freezer (4) are taken off from the precooler (2) or from the freezer (4).

6. Process according to one of Claims 1 to 5, **characterized in that** the part (13) of the first coolant stream used for vaporizing the condensed gas (9) is fed to the precooler (2) as a second coolant stream (14).

7. Device for cooling and/or purifying a process gas (1), possessing
• a precooler (2) constructed as indirect heat exchanger and having a process gas feed line (1) and a process gas exhaust line (3) and having a coolant feed line (12, 14) and a coolant takeoff (16),
• a freezer (4) constructed as indirect heat exchanger and having a process gas feed line (3) and a process gas exhaust line (5) and having a coolant feed line (11) and a coolant takeoff (12),
• an evaporator (10) constructed as indirect heat exchanger and having a coolant feed line (9) and a coolant takeoff (11) and having at least one heating medium feed line (13, 18) and one heating medium takeoff (14, 19),
• wherein the process gas discharge line (3) of the precooler (2) is connected to the process gas feed line (3) of the freezer (4),
• wherein the coolant takeoff (11) of the evaporator (10) is connected to the coolant feed line (11) of the freezer (4),
• wherein the coolant takeoff (12) of the freezer (4) is connected to the coolant feed line (12) of the precooler (2),
**characterized in that**
the coolant takeoff (12) of the freezer (4) and the coolant takeoff (16) of the precooler (2) are connected to one of the heating medium feed lines (13, 18) of the evaporator (10).

8. Device according to Claim 7, **characterized in that** the heating medium takeoff (14) which is connected via the heating medium feed line (13) to the coolant takeoff (12) of the freezer (4) is connected to the coolant feed line (14) of the precooler (2).

9. Device according to one of Claims 7 or 8, **characterized in that** a storage vessel for a condensed gas is connected to the coolant feed line (9) of the evaporator (10).

10. Device according to one of Claims 7 to 9, **characterized in that** the precooler (2) and/or the freezer (4) are provided with a condensate outlet line (6, 7).

## Revendications

1. Procédé de refroidissement et/ou de purification d'un gaz de processus (1),
• le gaz de processus (1) subissant un refroidissement préalable dans un refroidisseur préalable (2) sous échange thermique indirect avec un deuxième courant de réfrigérant (12),
• et étant refroidi dans un refroidisseur à basse température (4) sous échange thermique indirect avec un premier courant de réfrigérant (11),
• au moins une partie (12) du premier courant de réfrigérant (11) sortant du refroidisseur à basse température (4) étant acheminée au refroidisseur préalable (2) en tant que deuxième courant de réfrigérant,
• le premier courant de réfrigérant (11) étant obtenu par évaporation d'un gaz condensé (9),
**caractérisé en ce que**
• le gaz condensé (9) est évaporé sous échange thermique indirect à l'aide d'au moins une partie (13) du premier courant de réfrigérant (11) sortant du refroidisseur à basse température (4) et à l'aide d'au moins une partie (18) du deuxième courant de réfrigérant (12) sortant du refroidisseur préalable (2).

2. Procédé selon la revendication 1, **caractérisé en ce que** les quantités en premier et/ou en deuxième courants de réfrigérant (13, 18), qui sont utilisées en vue de l'évaporation du gaz condensé (9), sont déterminées en fonction de la température du gaz condensé évaporé (11).

3. Procédé selon l'une quelconque des revendications 1 ou 2, **caractérisé en ce que** le premier courant de réfrigérant (11) est obtenu par évaporation d'azote liquide (9).

4. Procédé selon l'une quelconque des revendications 1 à 3, **caractérisé en ce que**, dans le refroidisseur préalable (2) et/ou dans le refroidisseur à basse température (4), les impuretés sont éliminées du gaz de processus (1) par condensation ou par congélation.

5. Procédé selon la revendication 4, **caractérisé en ce que**, dans le refroidisseur préalable (2) et/ou dans le refroidisseur à basse température (4), les impuretés séparées par condensation sont retirées du refroidisseur préalable (2) ou du refroidisseur à basse température (4).

6. Procédé selon l'une quelconque des revendications 1 à 5, **caractérisé en ce que** la partie (13), utilisée en vue de l'évaporation du gaz condensé (9), du premier courant de réfrigérant est acheminée au refroidisseur préalable (2) en tant que deuxième courant de réfrigérant (14).

7. Dispositif de refroidissement et/ou de purification d'un gaz de processus (1), comprenant
• un refroidisseur préalable (2) configuré en tant qu'échangeur thermique indirect avec un conduit d'apport de gaz de processus (1) et un conduit d'évacuation de gaz de processus (3) et avec un conduit d'apport de réfrigérant (12, 14) et un conduit d'évacuation de réfrigérant (16),
• un refroidisseur à basse température (4) configuré en tant qu'échangeur thermique indirect avec un conduit d'apport de gaz de processus (3) et un conduit d'évacuation de gaz de processus (5) et avec un conduit d'apport de réfrigérant (11) et un conduit d'évacuation de réfrigérant (12),
• un évaporateur (10) configuré en tant qu'échangeur thermique indirect avec un conduit d'apport de réfrigérant (9) et un conduit d'évacuation de réfrigérant (11) et avec au moins un conduit d'apport d'agent caloporteur (13, 18) et un conduit d'évacuation d'agent caloporteur (14, 19),
• le conduit d'évacuation de gaz de processus (3) du refroidisseur préalable (2) étant relié au conduit d'apport de gaz de processus (3) du refroidisseur à basse température (4),
• le conduit d'évacuation de réfrigérant (11) de l'évaporateur (10) étant relié au conduit d'apport de réfrigérant (11) du refroidisseur à basse température (4),
• le conduit d'évacuation de réfrigérant (12) du refroidisseur à basse température (4) étant relié au conduit d'apport de réfrigérant (12) du refroidisseur préalable (2),
**caractérisé en ce que**
le conduit d'évacuation de réfrigérant (12) du refroidisseur à basse température (4) et d'évacuation du réfrigérant (16) du refroidisseur préalable (2) sont reliés à l'un des conduits d'apport d'agent caloporteur (13, 18) de l'évaporateur (10).

8. Dispositif selon la revendication 7, **caractérisé en ce que** l'évacuation d'agent caloporteur (14), qui est reliée par l'intermédiaire du conduit d'apport d'agent caloporteur (13) à l'évacuation de réfrigérant (12) du refroidisseur à basse température (4), est reliée au conduit d'apport de réfrigérant (14) du refroidisseur préalable (2).

9. Dispositif selon l'une quelconque des revendications 7 ou 8, **caractérisé en ce qu'**un récipient de réserve pour un gaz condensé est relié au conduit d'apport de réfrigérant (9) de l'évaporateur (10).

10. Dispositif selon l'une quelconque des revendications 7 à 9, **caractérisé en ce que** le refroidisseur préalable (2) et/ou le refroidisseur à basse température (4) sont pourvus d'un conduit d'évacuation de condensat (6, 7).
